# EUROPEAN PATENT SPECIFICATION

(11) **EP 3 820 719 B1**
(45) Date of publication and mention of the grant of the patent: **16.08.2023**
(21) Application number: 19759735.4
(22) Date of filing: 26.06.2019
(51) Int. Cl.: B60C 11/03, B60C 11/11, B60C 11/16

(54) **TYRE FOR VEHICLE WHEELS**
REIFEN FÜR FAHRZEUGRÄDER
PNEU POUR ROUES DE VEHICULE

(30) Priority: 13.07.2018 IT 201800007188
(43) Date of publication of application: 19.05.2021
(73) Proprietor: Pirelli Tyre S.p.A., 20126 Milano (IT)
(72) Inventor: CASAROTTO, Giovanni, 20126 Milano (IT); SPEZIARI, Diego Ettore, 20126 Milano (IT); BOLZONI, Roberto, 20126 Milano (IT)
(74) Representative: Susanetto, Carlo
(86) International application number: PCT/IB2019/055388
(87) International publication number: WO 2020/012277

(56) References cited:
- WO-A1-2014/118659
- WO-A1-2015/096963
- CN-B- 106 142 998
- DE-A1-102011 055 915

## Description

The present invention relates to a tyre for vehicle wheels.

A tyre generally comprises a carcass structure that is in the shape of a toroid about an axis of rotation and comprises at least one carcass ply having end flaps that engage in respective annular anchoring structures, said bead cores.

A belt structure is provided in the radial external position with respect to the carcass structure and, in tyres for cars, comprises at least two strips that are radially overlaid by rubber textile fabric provided with reinforcing cords, usually metal cords, arranged inside each strip in parallel with one another but crossed with respect to the cords of the adjacent strip, preferably symmetrically with respect to the equatorial plane of the tyre.

Furthermore, the belt structure preferably also comprises a third layer of textile or metal cords in radial external position, at least at the ends of the above-mentioned belt strips, which cords are arranged circumferentially (at 0 degrees).

In tubeless tyres, a radially internal layer is also provided, called a "liner", which is impermeable in order to ensure that said tyre is airtight.

A tread band is applied in radial external position with respect to the belt structure, which band is made of elastomer material and on which there is defined a tread surface that is intended to make contact with the road surface.

In order to ensure adequate road holding even when the road surface is wet, the tyres comprise a tread band provided with grooves of various shapes and geometries, which delimit tread band portions that are intended to make contact with the ground, called blocks.

The main function of the grooves is to allow the water present between the surface of the tyre and the road surface to escape when these come into contact with one another, thus preventing the hydrostatic pressure originating from the impact of the water against the advancing tyre from being able to cause the tyre to lift, even in part, from the road surface and preventing the vehicle from consequently losing control.

Small notches can also be made in the blocks of the tread band, called "sipes", which extend from the tread surface of the tyre towards the inside of the block. The function of the sipes is to offer further grip elements when driving on a surface covered in snow and trapping a certain amount of snow, thereby improving the grip with the road surface. The provision of sipes on the blocks is generally adopted in winter tyres.

Furthermore, studs may be provided in the blocks of the tread band, which, thanks to a portion thereof that projects from the tread surface, improves grip on icy road surfaces.

The overall configuration of the tread band defined by all the grooves and blocks represents the tread pattern.

The tread pattern can be a "directional" tread pattern, that is to say it is configured for being mounted on the vehicle so as to rotate in a preferred direction of travel. Examples of tyres according to the prior art are disclosed in WO 2015/096963, WO 2014/118659, CN 106142998 and DE 102011055915.

In particular, document WO2014/118659 describes a tyre comprising a tread band provided with a plurality of central blocks disposed in sequence along an equatorial plane defined on the tread band, a plurality of shoulder blocks extending from opposite axial ends of the tread band towards the equatorial plane, and a plurality of intermediate blocks disposed in sequence along the circumferential development of the tread band between the central blocks and the shoulder blocks. The plurality of central blocks comprises a plurality of first central blocks formed by a first branch and by a second branch which are substantially rectilinear and extend from a common end in a first direction and a second direction respectively, in order to define a V with its concave portion facing a first axial end of the tread band. The plurality of central blocks further comprises a plurality of second central blocks disposed in alternating sequence with the first central blocks and formed by a first branch and a second branch which are substantially rectilinear and extend from a common end in the second direction and the first direction respectively, in order to define a V with its concave portion facing a second axial end of the tread band. The Applicant has preliminarily observed that, in order for a tyre to have high road-holding performance when driving on wet surfaces or surfaces that are covered in snow or a water/snow mixture (slush), said tyre needs to be able to remove the water or snow from the footprint area quickly and effectively.

Furthermore, the Applicant has proved that this need can be met by the provision of large grooves that extend from the central region in order to flow into the opposite shoulder regions.

Moreover, the presence of blocks in the central region is *per se* desirable since it makes it possible to increase the circumferential flexibility of the central region, therefore allowing the tyre to rest against and adapt to the road surface more effectively.

However, the Applicant has also observed that the provision of a large number of grooves, especially if the dimensions thereof are significant, in order to comply with the requirements relating to the removal of the water, can result in a configuration of the central region of the tread band that is less resistant to circumferential and axial tangential stresses, with consequent negative impacts on the performance of the tyre during acceleration, braking and turning.

In fact, the Applicant has proved that, in order to improve this performance, the configuration of the blocks in the central region must, on the one hand, provide a sufficient number of grip edges, which are particularly important when the surface is covered by snow, and, on the other hand, provide a sufficient degree of compactness and rigidity in order to resist tangential stresses, in particular transverse tangential stresses.

The Applicant has also observed that the presence of circumferential grooves that extend along the entire extent of the tread band can be undesirable in certain types of tyres. For example, in studded tyres that are particularly intended for driving on icy surfaces, the presence of circumferential grooves can make the arrangement of the studs in the tread band more difficult and/or less effective.

Furthermore, the presence of large circumferential grooves at the sides of the blocks of the central region adversely affects the resistance of said blocks to tangential stresses in the transverse direction, in particular in the axial direction. The Applicant has therefore felt the need to provide a tyre, the tread pattern of which was as suitable as possible for use when driving on road surfaces in very different conditions, in particular on dry or wet surfaces or on surfaces covered in snow or a water/snow mixture (slush), thus fining an optimum balance between the various requirements set out above.

The Applicant has lastly found that by designing the central region of the tread band to have a plurality of blocks that face one another in pairs and are delimited in the circumferential and/or axial direction by a first plurality of main grooves that extend continuously up to opposite shoulder regions from the central region, where they are connected to one another, and further providing a second plurality of main grooves, which also extend from the central region towards the shoulder regions but without being connected to other main grooves, a tread pattern is produced that is particularly balanced in terms of performance on different road surfaces, and which optimally balances the requirements in respect of the rapid removal of water from the central zone and of the resistance of said central zone to tangential stresses.

In particular, in a first aspect, the invention relates to a tyre for vehicle wheels according to claim 1.

On account of these features, the applicant has verified that the tyre according to the invention performs optimally on different road surfaces. The behaviour of the tyre is balanced during both traction and turning, and guarantees optimum and rapid removal of water from the tread band.

In fact, the provision of the main grooves allows for the rapid discharge of water from the central region towards the opposite shoulder regions. In particular, this action is carried out by the first pairs of main grooves, which, at their axially internal ends, are connected to one another and to the successive first pairs of transverse grooves. In this way, a grid of channels is formed in which the water can be collected and conveyed towards the shoulder regions.

Furthermore, the first pairs of main grooves are interspersed with the second pairs of main grooves, which are also responsible for the removal of water towards the shoulder regions, without being connected to one another or to the other main grooves, thus avoiding weakening the central region too much. In this way, in fact, the main grooves are not overly dense in the central region, through which above all the first pairs of main grooves pass such that the first and the second blocks formed in this region have dimensions that are large enough to provide effective resistance to tangential stresses, in particular in the axial direction.

These features advantageously make it possible to use the tread pattern as a base for manufacturing different types of tyres, for example "all season" tyres or winter tyres or even summer tyres.

Furthermore, the configuration of the tyre according to the present invention advantageously makes it possible to also use the tread pattern thereof as a basis for a studded tyre.

The term "equatorial plane" of the tyre is intended to mean a plane that is perpendicular to the axis of rotation of the tyre and divides the tyre into two equal parts.

The "circumferential" direction is intended to mean a direction that is generally oriented according to the direction of rotation of the tyre or, at most, slightly inclined (no more than approximately 5°) with respect to the direction of rotation of the tyre.

The "axial" direction is intended to mean a direction that is substantially parallel to the axis of rotation of the tyre, or, at most, slightly inclined (no more than approximately 5°) with respect to said axis of rotation of the tyre. The axial direction is generally perpendicular to the circumferential direction.

Therefore, one element of the tread band, for example a groove or segment thereof, will be "axially internal" (or "axially external") when it is arranged in an internal position (or, respectively, an external position) in the axial direction of the tread band. In other words, an element in an axially internal position will generally be closer to the equatorial plane of the tread band, while an element in an axially external position will generally be closer to the axial ends of the tread band.

The term "effective width" referring to the tread band is intended to mean the width of the radially outermost portion of the tread band (from edge to edge), which is intended to come in contact with the ground.

The "central region" of the tread band is intended to mean a tread band portion that extends circumferentially about an equatorial plane of said tyre for a width that is equal to at least 30% of the effective width of the tread band, preferably for a width of between 40% and 60% of said effective width.

The central region may or may not extend symmetrically with respect to the equatorial plane.

In particular, when circumferential or almost circumferential grooves are made in the tread band, the central region can be delimited on one or both sides by one of said circumferential grooves.

The "shoulder regions" of the tread band are intended to mean the tread band portions that extend circumferentially on opposite sides of the central region in the axially external position of the tread band.

Each shoulder region preferably extends for a width that is equal to at least 10% of the effective width of the tread band.

The term "groove" is intended to mean a recess made in a tread band portion that has a width that is greater than or equal to 1.5 mm, and preferably has a depth of more than 3 mm.

A groove is said to be "circumferential" when it extends in a circumferential direction or, at most, is inclined with respect to the circumferential direction by an angle of less than 5°.

A groove is said to be "transverse" when it extends in a direction that is inclined with respect to the circumferential direction by an acute angle of more than at least 10°.

The term "sipe" is intended to mean a recess made in a tread band portion that has a width that is smaller than 1.5 mm, preferably smaller than or equal to 1 mm. The width of the sipes and grooves is intended to be measured at a depth that is greater than or equal to 1 mm, preferably greater than or equal to 1.5 mm.

In the case in which the width of the groove or of the sipe varies along its longitudinal extent, the width is considered to be an average width, the value of which is the average of the various width values that are suitably weighed on the basis of the relative longitudinal extensions. For example, if a groove has a width of 5 mm for 80% of its longitudinal extension and a width of 3 mm for the remaining 20%, the average of the width to be taken into account will be equal to 5 x 0.8 + 3 x 0.2 = 4.6 mm.

Similarly, if the width of one groove, in particular of a transverse groove, varies along the tread band depending on the length of the pitch to which it belongs, the average value will be considered.

One end of one groove is defined as being "blind" when it is not open to another groove.

The inclination of a transverse groove with respect to a circumferential direction identified on the tread band is defined by the acute angle formed by the groove and the circumferential direction. As a specific case, a transverse groove that extends in parallel with the axis of the tyre will be at an inclination of 90° with respect to the circumferential direction.

Two (or more) transverse grooves are inclined "in a concordant manner" when the profile of both grooves increases or decreases when considered on a Cartesian plane positioned on the tread band (tangentially thereto), in which the y-axis is parallel to the circumferential direction and the x-axis is parallel to the axis of the tyre.

Accordingly, two transverse grooves are inclined "in a discordant manner" when the profile thereof increases for one groove and decreases for the other groove, when considered in said Cartesian plane.

A groove has an inclination that "generally decreases" from a first region towards a second region when:
- for segments equal to at least 50% of the longitudinal extension of the groove between the first and the second region, the inclination of the groove decreases as it moves from the first region towards the second region, and
- for segments equal to at least 80% of the longitudinal extension of the groove between the first and the second region, the inclination of the groove does not increase as it moves from the first region towards the second region.

Two groove segments (or two grooves) are "substantially aligned" when their longitudinal axes are offset, at least at their respective ends that face one another, by an amount that is smaller than their width (for segments having different widths, the larger width is taken into consideration).

Two grooves are "successive" when they are arranged one after the other in the tread surface, taking into consideration the rotation of the tyre in any one of the two directions of rotation. In particular, two grooves of the same type are successive when no other grooves of the same type are provided therebetween. The "tread pattern" means the overall configuration of the tread band as defined by all of the grooves and the blocks delimited by the grooves.

A "module" of the tread pattern is defined by the minimum tread band portion, a repeated sequence of which configuration is provided along the circumferential extent of the tread band in order to form said tread pattern.

A module extends between the axial ends of the tread band.

Furthermore, while maintaining an identical basic configuration, the modules can have a circumferential dimension (said "pitch") that differs slightly for each module, for example modules having two, three or four different pitches can be used on one tread band in various combinations.

A module may be formed by two or more elementary portions (or submodules), which extend between the two axial ends of the tread band and are arranged in the same sequence inside each module.

In this case, each elementary portion can have the same basic configuration in different modules but slightly different circumferential dimensions (that is "pitches"), such that each module can be formed by elementary portions having a different pitch.

The modules having two elementary portions are also called "two-pitch modules", while the modules that do not comprise at least two elementary portions (or, in other words, modules that comprise just one submodule that coincides with the module) are also called "single-pitch modules".

The "footprint area" is intended to mean the tread band portion that instantly comes in contact with the road surface during the revolution of the tyre. Under real-life conditions, the footprint area is dependent on various parameters, including the tyre pressure, the load it is subjected to, the road surface and the driving conditions, for which reference values may, however, be defined.

In the above-mentioned aspect, the present invention can comprise at least one of the additional preferred features specified below.

Each of said first main grooves preferably comprises a first segment having a curvilinear profile, which extends from said first shoulder region towards an equatorial plane of said tread band, and has an inclination with respect to said circumferential direction that generally decreases from said first shoulder region towards said central region.

Each of said second main grooves preferably comprises a first segment that has a curvilinear profile, which extends from said second shoulder region towards an equatorial plane of said tread band, and has an inclination with respect to said circumferential direction that generally decreases from said second shoulder region towards said central region.

Said first segment of said first main groove and said first segment of said second main groove are preferably inclined in a discordant manner with respect to said circumferential direction.

In this way, removal of the water from the central region towards the respective shoulder regions is facilitated in particular when the tyre is rotated in a predefined direction.

Said first segments of each of said first and said second main grooves preferably have a curvilinear profile that does not comprise inflection points.

The inclination with respect to said circumferential direction of said first segment of each of said first and/or said second main grooves in said first shoulder region is preferably defined by a first angle of between 70° and 90°.

The inclination with respect to said circumferential direction of said first segment of each of said first and/or said second main grooves in said central region is preferably defined by an angle of between 40° and 60°.

In this way, the rapid removal of the water from the central region towards the shoulder regions is facilitated, while simultaneously maintaining a higher degree of resistance of the shoulder regions to the transverse tangential stresses.

The width of each of said first main grooves preferably decreases from said first shoulder region towards said equatorial plane.

The width of each of said second main grooves preferably decreases from said second shoulder region towards said equatorial plane.

In this way, on the one hand, the removal of the water from the central region towards the respective shoulder regions is facilitated, and, on the other hand, the rigidity of the first and the second blocks in the central region is improved.

Said first main groove and said second main groove are preferably axially offset in each first pair of main grooves.

Said third main groove and said fourth main groove are preferably axially offset in each second pair of main grooves.

In this way, the noise produced by the tyre rolling on the road surface is advantageously decreased, since the impacts of the edges of the respective grooves with the ground are offset with respect to one another, thereby decreasing the intensity of the overall noise generated.

Said third main grooves and said fourth main grooves preferably have a profile that is substantially symmetrical with respect to said circumferential direction. Said third main grooves preferably have a profile that is substantially parallel to said first main grooves.

Said fourth main grooves preferably have a profile that is substantially parallel to said second main grooves.

Said end segment of said first main groove preferably comprises a first portion, which extends as a continuation of said first segment towards said first shoulder region, and a second portion, which extends as a continuation of said first portion towards said second shoulder region.

Said first portion and said second portion of said end segment preferably straddle an equatorial plane of said tread band.

Said second portion of said end segment preferably extends up to said second successive main groove.

The end segment thus assumes a configuration having a zigzag-shaped polygonal chain, which joins the first curvilinear segment of the first main groove to the second main groove of the successive pair of first main grooves.

Said first portion of said end segment preferably extends over the extension of said fourth main groove.

Said second portion of said end segment preferably extends over the extension of said third main groove.

Said first blocks are preferably V-shaped and comprise a vertex that points towards said first shoulder region and a pair of arms that extend towards said second shoulder region in respective directions at opposite inclinations with respect to said circumferential direction.

Said second blocks are preferably V-shaped and comprise a vertex that points towards said second shoulder region and a pair of arms that extend towards said first shoulder region in respective directions at opposite inclinations with respect to said circumferential direction.

Said first and second blocks of each pair preferably comprise concavities that face one another.

The first and second blocks are preferably substantially specular with respect to said circumferential direction, more preferably with respect to said equatorial plane.

On account of these features, the first and the second blocks define a central region, the behaviour of which is scarcely influenced by the direction of rotation of the tyre. This feature is especially important in that it makes it possible to obtain substantially balanced performance in terms of traction (that is of acceleration and of braking).

Said first and second blocks of each pair are preferably circumferentially delimited by two successive first pairs of main grooves.

Said first and second blocks of each pair are preferably axially offset.

In each pair of first and second blocks, an arm of one of said first and second blocks is preferably partially received in the concavity of the other of said first and second blocks.

In this way, the first and the second blocks partially fit into one another, thereby assisting one another in resisting tangential stresses. For example, every first block is provided with assistance for resisting the axial stresses both in one direction by the second block to which it is coupled, and in the opposite direction by a first block that is adjacent thereto, and by the blocks formed in the shoulder region.

The vertices of said first blocks are preferably aligned in a circumferential direction. The vertices of said second blocks are preferably aligned in a circumferential direction.

Each of said first secondary grooves preferably intersects one of said third main grooves at an axially internal end region thereof.

Each of said third main grooves preferably comprises an axially internal blind end. Said axially internal blind end is preferably positioned inside said first block between said first secondary groove and said end segment of said first main groove.

Each of said first secondary grooves preferably extends between a first axially external end and a second axially internal end, said first end and said second end being open in respective successive first main grooves.

Each of said first secondary grooves is preferably inclined with respect to said circumferential direction in a discordant manner with respect to said first segment of said first main groove.

Said first secondary grooves are preferably inclined with respect to said circumferential direction by an angle of between 20° and 30°.

Said first secondary grooves are preferably parallel to one another.

Said first ends of said first secondary grooves are preferably substantially aligned in said circumferential direction.

Said second ends of said first secondary grooves are preferably substantially aligned in said circumferential direction.

Each of said first secondary grooves preferably comprises a first portion that extends between said first end and a third main groove, and a second portion that extends between said third main groove and said second end.

Said first and said second portion of said first secondary groove are preferably substantially rectilinear and aligned with one another.

The width of said first portion of said first secondary groove preferably increases from said first end up to said third main groove.

The ratio between the width of said first portion of said first secondary groove at said third main groove and at said first end is preferably between 1.25 and 1.5, more preferably between 1.3 and 1.4.

In this way the snow-trapping effect during braking is maximised.

The width of said second portion of said first secondary groove preferably increases from said third main groove up to said second end.

The ratio between the width of said second portion of said first secondary groove at said second end and at said third main groove is preferably between 1.25 and 1.5, more preferably between 1.3 and 1.4.

This maximises the snow-trapping effect during braking.

This configuration of the first secondary grooves promotes the grip of the tyre on a snow-covered surface, in particular during traction.

Each of said second secondary grooves preferably intersects one of said fourth main grooves at an axially internal end region thereof.

Each of said fourth main grooves preferably comprises an axially internal blind end.

Said axially internal blind end is preferably positioned inside said second block between said second secondary groove and said end segment of said first main groove.

Each of said second secondary grooves preferably extends between a first axially external end and a second axially internal end, said first end and said second end being open in respective successive second main grooves.

Each of said second secondary grooves is preferably inclined with respect to said circumferential direction in a discordant manner with respect to said first segment of said second main groove.

Said second secondary grooves are preferably inclined with respect to said circumferential direction by an angle of between 20° and 30°.

Said second secondary grooves are preferably parallel to one another.

Said first ends of said second secondary grooves are preferably substantially aligned in said circumferential direction.

Said second ends of said second secondary grooves are preferably substantially aligned in said circumferential direction.

Each of said second secondary grooves preferably comprises a first portion that extends between said first end and a fourth main groove, and a second portion that extends between said fourth main groove and said second end.

Said first and said second portion of said second secondary groove are preferably substantially rectilinear and aligned with one another.

The width of said first portion of said second secondary groove preferably increases from said first end up to said fourth main groove.

The ratio between the width of said first portion of said second secondary groove at said fourth main groove and at said first end is preferably between 1.25 and 1.5, more preferably between 1.3 and 1.4.

This maximises the snow-trapping effect during braking.

The width of said second portion of said second secondary groove preferably increases from said fourth main groove up to said second end.

The ratio between the width of said second portion of said second secondary groove at said second end and at said fourth main groove is preferably between 1.25 and 1.5, more preferably between 1.3 and 1.4.

This maximises the snow-trapping effect during braking.

Said first secondary groove and said second secondary groove are preferably substantially mutually specular with respect to an equatorial plane of said tread band.

A plurality of second pairs of secondary grooves are preferably made in said tread band and are provided in regular succession over the circumferential extent of said tread band, each second pair of secondary grooves being formed by a third secondary groove and by a fourth secondary groove.

Said third secondary groove preferably extends in said first shoulder region.

Said third secondary groove preferably extends between two of said first main grooves that are successive.

Said third secondary groove is preferably arranged between said first secondary groove and a first lateral edge of said tread band that externally delimits said first shoulder region.

Said fourth secondary groove preferably extends in said second shoulder region. Said fourth secondary groove preferably extends between two of said second main grooves that are successive.

Said fourth secondary groove is preferably arranged between said second secondary groove and a second lateral edge of said tread band that externally delimits said second shoulder region.

Said third secondary grooves are preferably substantially parallel to said first secondary grooves.

Said fourth secondary grooves are preferably substantially parallel to said second secondary grooves.

Each of said third secondary grooves preferably comprises a first portion that extends between a first axially external end and a third main groove, and a second portion that extends between said third main groove and a second axially internal end.

Said first and said second portion of said third secondary groove are preferably substantially rectilinear and aligned with one another.

The width of said first portion of said third secondary groove preferably increases from said first end up to said third main groove.

The width of said second portion of said third secondary groove preferably increases from said third main groove up to said second end.

Each of said fourth secondary grooves preferably comprises a first portion that extends between a first axially external end and a fourth main groove, and a second portion that extends between said fourth main groove and a second axially internal end.

Said first and said second portion of said fourth secondary groove are preferably substantially rectilinear and aligned with one another.

The width of said first portion of said fourth secondary groove preferably increases from said first end up to said fourth main groove.

The width of said second portion of said fourth secondary groove preferably increases from said fourth main groove up to said second end.

Said third secondary groove and said fourth secondary groove are preferably substantially mutually specular with respect to an equatorial plane of said tread band.

Respective pluralities of sipes are preferably made in at least some blocks defined on said tread band.

Sipes extending in a substantially axial direction are preferably made in said first and second blocks.

In this way, the action of the sipes is also substantially independent of the direction of rotation of the tyre in the central region of the tread band.

Sipes extending in a direction that is transverse to the main direction of extension of said blocks are preferably made on the blocks defined between said first pairs of secondary grooves and said second pairs of secondary grooves.

Sipes that extend in a direction that is substantially parallel to the main direction of extension of said blocks are preferably made in the blocks defined between said second pairs of secondary grooves and the respective lateral edges of said tread band.

Studs are preferably provided in at least some blocks that are defined on said tread band.

The features and advantages of the invention will become clearer from the detailed description of a few preferred embodiments thereof, which are illustrated by way of non-limiting example, with reference to the attached drawings, in which:
- Fig. 1 is a perspective front view of a first example of a tyre for vehicle wheels, which is formed in accordance with the present invention;
- Fig. 2 is an enlarged schematic view of a substantial portion of the tread band of the tyre in Fig. 1; and
- Fig. 3 is an enlarged schematic view of a substantial tread band portion of a variant embodiment of the tyre of Fig. 1.

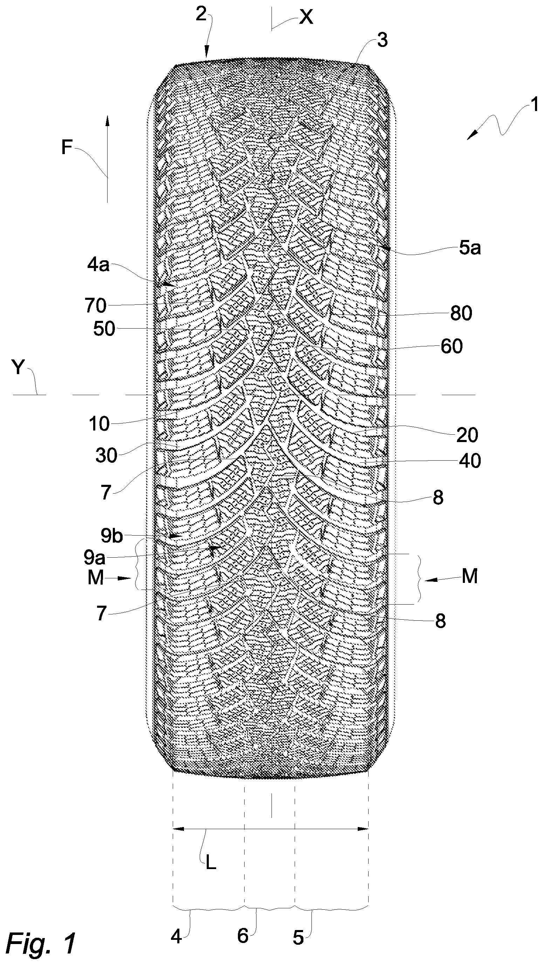

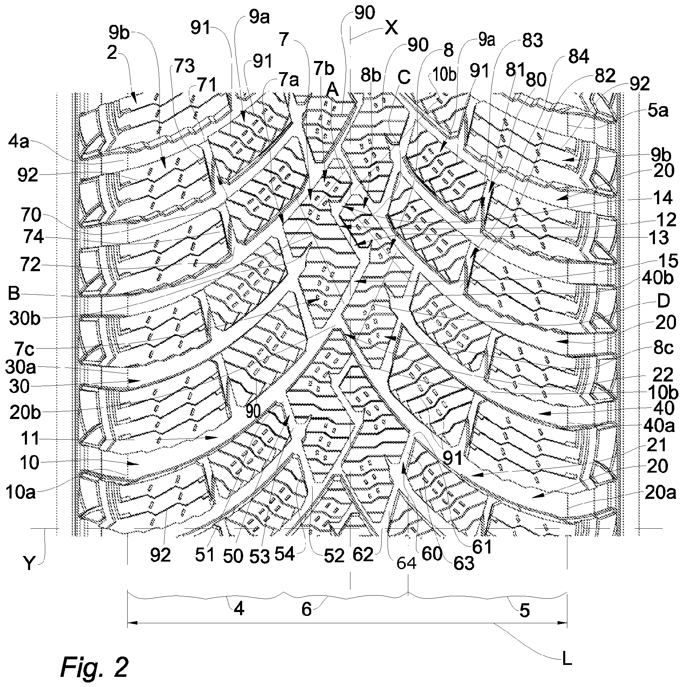

With initial reference to Fig. 1 and 2, 1 indicates a tyre for vehicle wheels as a whole, which is formed in accordance with the present invention.

The tyre 1 comprises a tyre structure that is conventional *per se* but is not shown in the attached figures, and a tread band 2, on which a tread surface 3, located in a radially external position of the tread band 2 and intended to make contact with a road surface, is defined.

The tyre 1 has a conventional generically toroidal shape, which extends about an axis of rotation so as to define an axial direction Y on the tread surface 3 that is parallel to said axis of rotation, and which an equatorial plane X crosses that is perpendicular to the axis of rotation and defines a circumferential direction on the tread surface 3 that is parallel to said equatorial plane.

An effective width L is identified on the tread band 2, which is defined as the maximum width of the tread band intended to make contact with the ground during standard use conditions.

The tyre 1 is a directional tyre, in which a preferred direction of rotation of the tyre is defined, shown in the figures by the arrow F.

A first shoulder region 4 is also defined on the tread band 2, which is delimited on the axially external side by a first lateral edge 4a of the tread band 2, a second shoulder region 5, which is axially opposite the first shoulder region 4 and is delimited on the axially external side by a second lateral edge 5a of the tread band 2, and a central region 6, which is arranged between the first and the second shoulder region 4 and 5 and straddles the equatorial plane X.

A plurality of pairs of first blocks 7 and second blocks 8 are provided in regular succession along the circumferential extent of the central region 6. For each pair, a first block 7 and a second block 8 are aligned in the axial direction Y, at least in part. In other words, the respective projections in the axial direction Y of the first and the second block 7, 8 of each pair of blocks partially overlap.

Each first block 7 is V-shaped and comprises a vertex 7a that faces the first shoulder region 4 and a pair of arms 7b and 7c that extend towards the second shoulder region 5 in respective directions A and B which are inclined in opposite directions with respect to the circumferential direction.

The directions A and B are at an inclination of between 30° and 40°, for example approximately 35°, and an inclination of between 20° and 30°, for example approximately 25°, respectively, with respect to the circumferential direction. Similarly, each second block 8 is V-shaped and comprises a vertex 8a that faces the second shoulder region 5 and a pair of arms 8b and 8c that extend towards the first shoulder region 4 in the directions C and D, respectively. In this way, the arms 7b and 7c are substantially parallel to the arms 8c and 8b.

The directions C and D are at an inclination of between 30° and 40°, for example approximately 35°, and an inclination of between 20° and 30°, for example approximately 25°, respectively, with respect to the circumferential direction.

The directions C and D are preferably substantially specular with respect to the directions A and B with respect to the circumferential direction.

On account of this configuration, the respective concavities of the first block 7 and the second block 8 point towards one another.

However, said blocks are axially offset such that the arm 7c of the first block 7 can be partially received inside the concavity of the corresponding second block 8, and the arm 8b of the second block 8 can be partially received inside the concavity of the corresponding first block 7.

In this way, the first and second blocks 7 and 8 of each pair partially fit into one another, thereby increasing the mutual resistance to tangential stresses, in particular transverse tangential stresses.

All the vertices 7a of said first blocks 7 and all the vertices 8a of the second blocks 8 are preferably aligned in respective circumferential directions.

A plurality of first pairs of main grooves are also defined in the tread band 2, which are provided in regular succession along the circumferential extent of the tread band 2 in order to delimit in part the first and the second blocks 7 and 8.

Each first pair of main grooves is formed by a first main groove 10, which extends from the first shoulder region 4 towards the central region 6, and by a second main groove 20, which extends from the second shoulder region 5 towards the central region 6.

Each first main groove 10 comprises a first segment 11, which extends from an axially external end 10a, which is open in the first shoulder region 4, towards the central region 6, and an end segment 12, axially internal, which extends as a continuation of the first segment 11 until it opens, with an axially internal end 10b thereof, into a second main groove 20, which is successive to the second main groove 20 that forms the pair of first main grooves together with the first main groove 10.

The first segment 11 has a curvilinear profile that does not comprise inflection points and has an inclination with respect to the circumferential direction that generally decreases from the first shoulder region 4 towards the central region 6. The end segment 12 of each first main groove 10 comprises a polygonal chain configuration and comprises a first portion 13, which extends as a continuation of the first segment 11 towards the first shoulder region 4, and a second portion 14 that extends as a continuation of the first portion 13 towards the second shoulder region 5.

The first portion 13 and the second portion 14 straddle the equatorial plane X of the tread band 2 and are inclined in a discordant manner with respect to the circumferential direction.

Each second main groove 20 comprises a first segment 21, which extends from an axially external end 21a, which is open in the second shoulder region 5, towards the central region 6. In a similar way to the first segment 11 of the first main groove 10, the first segment 21 of the second main groove 20 also has a curvilinear profile, which does not comprise inflection points and has an inclination with respect to the circumferential direction that generally decreases from the second shoulder region 5 towards the central region 6.

On the whole, the profiles of the first and second main groove 10 and 20 of each first pair of main grooves, are therefore similar, comprising a main part of the respective first segments 11 and 21, which are substantially symmetrical with respect to the equatorial plane X, and having concavities that point towards the same side of the tread band.

However, the second main groove 20 is axially offset with respect to the first transverse groove 10. In fact, the respective ends 10a and 20a are offset by between 5 and 20 mm, preferably between 10 and 20 mm, even more preferably between 13 and 17 mm, for example by approximately 15 mm, measured in the circumferential direction.

By selecting a suitable value for the offset between said ends 10a and 20a, it is possible to further improve the performance of the tyre in terms of noise, thereby optimising entry of the correspondent blocks into the footprint area.

The first segment 21 extends from an axially external end 20a of the second main groove 20, which is open in the second shoulder region 5, up to the axially internal end 20b of the second main groove 20, which is open in the first segment 11 of the first main groove 10.

In particular, the second main groove 20 joins the first main groove 10 shortly after having crossed the equatorial plane X.

An internal end region 15 therefore remains defined in the first segment 11 of each first main groove 10, which region is delimited by the end 20b of the second main groove 20 and by the start of the end segment 12.

Furthermore, an internal end region 22 remains defined in the first segment 21 of each second main groove 20, which region is delimited by the end 20b and by the end 10b of the first main groove 10.

Therefore, in this way a zigzag-shaped polygonal chain is formed, which is defined by the internal end region 22 of the second main groove 20, by the internal end region 15 of the first main groove 10, by the first portion 13 of the end segment 12, and by the second portion 14 of the end segment 12.

This polygonal chain extends continuously along the entire circumferential extension of the equatorial plane X and every subsequent portion thereof preferably crosses said equatorial plane.

This polygonal chain also separates the first and the second blocks 7 and 8 on the axially internal side.

A plurality of second pairs of main grooves are also defined in the tread band 2, which are provided in regular succession along the circumferential extent of the tread band 2 in an alternating position with the first pairs of main grooves 10 and 20.

Each second pair of main grooves is formed by a third main groove 30, which extends from the first shoulder region 4 towards the central region 6, and by a fourth main groove 40, which extends from the second shoulder region 5 towards the central region 6.

In particular, each third main groove 30 extends between an axially external end 30a that is open in the first shoulder region 4 and an axially internal blind end 30b inside the first block 7.

Similarly, each fourth main groove 40 extends between an axially external end 40a that is open in the second shoulder region 5 and an axially internal blind end 40b inside the second block 8.

None of the third and fourth main grooves 30, 40 intersects another first, second, third or fourth main groove.

The third and the fourth main grooves 30 and 40 have a similar curvilinear profile that is substantially parallel to the first and the second main grooves 10 and 20.

Furthermore, the third and the fourth main grooves 30 and 40 are substantially symmetrical with respect to the equatorial plane X, even if they are axially offset with respect to one another. In particular, the respective ends 30a and 40a are offset by between 5 and 20 mm, preferably between 10 and 20 mm, even more preferably between 13 and 17 mm, for example by approximately 15 mm, measured in the circumferential direction.

By selecting a suitable value for the offset between said ends 30a and 40a, it is possible to further improve the performance of the tyre in terms of noise, thereby optimising the entry of the relative blocks into the footprint area.

The first portion 13 of the end segment 12 is advantageously located on the theoretical extension of the fourth main groove 40, even if there are no points of contact between these grooves.

Similarly, the second portion 14 of the end segment 12 is also located on the theoretical extension of the third main groove 30.

All the first, second, third and fourth main grooves 10, 20, 30 and 40 have a depth of approximately 9 mm and a variable width that decreases from the shoulder regions towards the central region.

In particular, the width of these main grooves varies from approximately 9-12 mm in the relevant shoulder region up to approximately 2.5-4 mm in the central region 6.

The depth of the first main grooves 10 is reduced to approximately 4 mm in large segments of the end segment 12, as well as in the internal end region 22 of the second main groove 20 and in the internal end region 15 of the first main groove 10.

In this way, the first and second blocks 7 and 8 are connected to one another to a greater degree, thereby increasing their resistance to tangential stresses, in particular transverse tangential stresses.

A plurality of first pairs of secondary grooves are also made in the tread band 2, which are provided in regular succession along the circumferential extent of the tread band 2.

The first pairs of secondary grooves preferably partially delimit the first and the second blocks 7, 8 on the axially external side thereof.

Each first pair of secondary grooves is formed by a first secondary groove 50, which extends between a first axially external end 51 and a second axially internal end 52, which are open in two first main grooves 10 that are mutually successive, and by a second secondary groove 60 that extends between a first axially external end 61 and a second axially internal end 62, which are open in two second main grooves 20 that are mutually successive.

Each first secondary groove 50 intersects a third main groove 30 in an axially internal end region thereof, which is near to its end 30b. In this way, a first portion 53, which extends between the first end 51 and the third main groove 30, and a second portion 54, which extends between the third main groove 30 and the second end 52, remain defined on each first secondary groove 50.

The first and the second portion 53 and 54 of each first secondary groove are aligned with one another in a direction that is substantially rectilinear and is inclined with respect to the circumferential direction by an angle of approximately 25°, in a discordant manner with respect to the inclination of the first segments 11 of the first main grooves 10 between which it extends.

The width of the first portion 53 of each first secondary groove 50 increases from the first end 51, where it measures approximately 3 mm, up to the third main groove 30, where it measures approximately 4 mm.

In the same way, the width of the second portion 54 of each first secondary groove 50 increases from the third main groove 30, where it measures approximately 3 mm, up to the second end 52, where it measures approximately 4 mm.

All of the first secondary grooves 50 are substantially parallel to one another and the first and second ends 51 and 52 thereof are also substantially aligned in respective circumferential directions.

The second secondary grooves 60 are substantially specular with respect to the first secondary grooves 50 with respect to the equatorial plane X.

In particular, each second secondary groove 60 intersects a fourth main groove 40 in an axially internal end region thereof, which is near to its end 40b. In this way, a first portion 63, which extends between the first end 61 and the fourth main groove 40, and a second portion 64, which extends between the fourth main groove 40 and the second end 62, remain defined on each second secondary groove 60.

The first and the second portion 63 and 64 of each second secondary groove are aligned with one another in a substantially rectilinear direction, which is inclined with respect to the circumferential direction by an angle of approximately 25°, in a discordant manner with respect to the inclination of the first segments 21 of the second main grooves 20 between which it extends.

The width of the first portion 63 of each second secondary groove 60 increases from the first end 61, where it measures approximately 3 mm, up to the fourth main groove 40, where it measures approximately 4 mm.

In the same way, the width of the second portion 64 of each second secondary groove 60 increases from the fourth main groove 40, where it measures approximately 3 mm, up to the second end 62, were it measures approximately 4 mm.

All of the second secondary grooves 60 are substantially parallel to one another and their first and second ends 61 and 62 are also substantially aligned in respective circumferential directions.

The depth of the first and the second secondary grooves 50 and 60 varies between approximately 7 mm in the groove segments having a smaller width and approximately 4 mm in the groove segments having a larger width.

This further increases the resistance of the first and the second blocks 7 and 8 to transverse stresses.

A plurality of second pairs of secondary grooves are also made in the tread band 2, which are provided in regular succession along the circumferential extent of the tread band 2.

Each second pair of secondary grooves is formed by a third secondary groove 70, which extends in the first shoulder region 4 between a first axially external end 71 and a second axially internal end 72, which are open in two first main grooves 10 that are mutually successive, and by a fourth secondary groove 80, which extends in the second shoulder region 5 between a first axially external end 81 and a second axially internal end 82, which are open in two second main grooves 20 that are mutually successive.

The third secondary grooves 70 are substantially parallel to the first secondary grooves 50 and are arranged between said first secondary grooves and the first lateral edge 4a.

In a similar way to the first secondary grooves 50, the third secondary grooves 70 intersect a third main groove 30 such that a first portion 73, which extends between the first end 71 and the third main groove 30, and a second portion 74, which extends between the third main groove 30 and the second end 72, remain defined in each third secondary groove 70.

The first and the second portion 73 and 74 of each third secondary groove 70 are aligned with one another and have a variable width in a very similar way to the first and the second portion 53, 54 of each first secondary groove 50.

The fourth secondary grooves 80 are substantially parallel to the second secondary grooves 60 and are arranged between said second secondary grooves and the second lateral edge 5a.

In a similar way to the second secondary grooves 60, the fourth secondary grooves 80 intersect a fourth main groove 40 such that a first portion 83, which extends between the first end 81 and the fourth main groove 40, and a second portion 84, which extends between the fourth main groove 40 and the second end 82, remain defined in each fourth secondary groove 80.

The first and the second portion 83 and 84 of each fourth secondary groove 80 are aligned with one another and have a variable width in a very similar way to the first and the second portion 63, 64 of each second secondary groove 60.

In addition to the first and the second blocks 7 and 8, shoulder blocks 9a and 9b remain also defined on the tread band 2 by all the grooves defined above.

The shoulder blocks 9a are delimited by the first and second pairs of main grooves (10, 30 or 20 and 40) and by the first and second pairs of secondary grooves (50, 70 or 60 and 80), while the shoulder blocks 9b are delimited by the first and second pairs of main grooves (10, 30 or 20 and 40), by the second pairs of secondary grooves (70 or 80) and by the lateral edges of the tread band (4a or 5a).

Sipes are preferably provided in all the blocks described above, which sipes support the performance of the tyre on snow-covered surfaces.

In particular, sipes 90 are made in the first and second blocks 7 and 8 and extend substantially in the axial direction Y, sipes 91 are made in the shoulder blocks 9a and extend in a direction that is transverse to the main direction of extension of the blocks 9a (defined by the direction of the first or second main grooves), and sipes 92 are made in the shoulder blocks 9b and extend in a direction that is substantially parallel to the main direction of extension of the blocks 9b (also defined by the direction of the first or second main grooves).

The blocks and the grooves identified above define, as a whole, the tread pattern of the studded tyre 1.

The tread pattern is formed by the continuous repeated sequence of a single module M that is formed by the tread band portion located between two successive first pairs of main grooves 10 and 20.

Each module M is in turn formed by a first elementary portion, which extends from a first pair of main grooves 10 and 20 up to the second pair of main grooves 30 and 40, and by a second elementary portion, which extends from the second pair of main grooves 30 and 40 up to the successive first pair of main grooves 10 and 20.

Each first elementary portion and each second elementary portion can have a circumferential dimension that corresponds to a long pitch or to a short pitch that is shorter than the long pitch.

In particular, the long pitch is approximately 30% greater than the short pitch.

Each module M can be formed by a first and a second elementary portion having a short pitch or a long pitch that are combined in various ways such that modules are provided on the tread pattern in which both the first and the second elementary portion have a long pitch, or modules in which both the first and the second elementary portion have a short pitch, or modules in which the first elementary portion has a short pitch and the second elementary portion has a long pitch or, lastly, modules in which the first elementary portion has a long pitch and the second elementary portion has a short pitch.

The tyre 1, formed as described above, performs well on different road surfaces, thereby optimally balancing the requirements in respect of the rapid removal of water from the central zone and of resistance of said central zone to tangential stresses. The tyre 1 in particular performs optimally as a tyre for use in winter, as better described in the example indicated above.

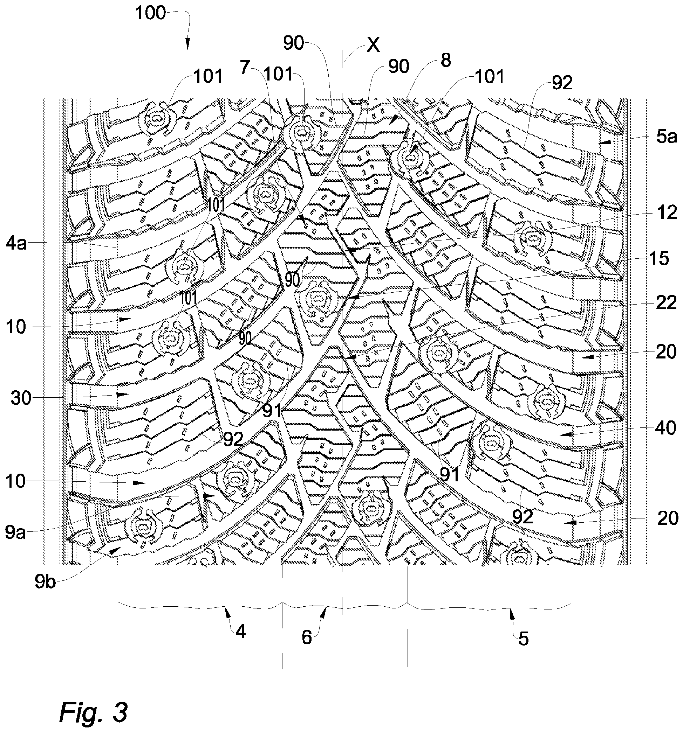

One variant of the tyre 1, which is indicated by 100 as a whole, is shown in Fig. 3. Details of the tyre 100 that are similar to those of the tyre 1 are denoted in Fig. 3 by the same reference numerals given in the previous example.

The tyre 100 differs from the tyre 1 in that a plurality of studs 101 are arranged in suitable positions in the blocks formed on the tread band 2.

In this way, the tyre 100 is also particularly suitable for driving on icy surfaces.

### EXAM PLE

205/55 R16 tyres currently sold by the applicant (comparison) were measured in comparison with tyres of equal size having a tread pattern formed in accordance with the invention, as per the preferred example described above with reference to Fig. 1 and 2 (invention).

The applicant therefore mounted the tyres on a Volkswagen Golf 7 and carried out a series of tests according to recognised standards, on different driving surfaces, in particular on icy and snow-covered road surfaces, in order to measure the performance of said tyres during traction (acceleration and braking).

The results of the tests are summarised in the following table, Table 1, in which the values for the parameters are given in percent, whereby the values relating to the comparison tyre are equal to 100.

**Table 1**

| | comparison | invention |
|---|---|---|
| Braking on snow | 100 | 100 |
| Braking on ice | 100 | 102 |
| Accelerating on snow | 100 | 106 |
| Accelerating on ice | 100 | 119 |

The tests have therefore demonstrated how the tyre according to the invention therefore substantially and significantly improves the performance of the tyre during acceleration and the resistance to rolling.

Similar tests carried out on dry road surfaces and on wet road surfaces have identified comparable performance and behaviour.

## Claims

1. Tyre for wheels of vehicles, comprising a tread band (2), on which there are defined:
- a first shoulder region (4) and a second shoulder region (5) that are axially opposite;
- a central region (6) that is interposed between said first and second shoulder region;
- a plurality of pairs of first blocks (7) and second blocks (8) that are provided in regular succession over the circumferential extent of said central region, each first block and each second block of each of said pairs being at least partially aligned in an axial direction (Y) that is defined on said tread band,
- a plurality of first pairs of main grooves (10, 20) that are provided in regular succession over the circumferential extent of said tread band (2) in order to partially delimit said first and said second blocks (7, 8), each first pair being formed by a first main groove (10) that extends from said first shoulder region (4) towards said central region (6), and by a second main groove (20) that extends from said second shoulder region (5) towards said central region (6),
- a plurality of second pairs of main grooves (30, 40) that are provided in regular succession over the circumferential extent of said tread band in an alternating position with said first pairs of main grooves (10, 20), each second pair being formed by a third main groove (30) that extends from said first shoulder region (4) towards said central region (6), and by a fourth main groove (40) that extends from said second shoulder region (5) towards said central region, said third and said fourth main grooves not intersecting any other first, second, third or fourth main groove,
wherein said second main groove (20) comprises an axially internal end (20b) that is connected to said first main groove (10) and wherein said first main groove (10) comprises an axially internal end segment (12) that is connected to a second main groove (20) which is successive to said second main groove so as to separate a first block (7) and a second block (8) of one of said pairs of first and second blocks, and
wherein a plurality of first pairs of secondary grooves (50, 60) are made in said tread band, which are provided in regular succession over the circumferential extent of said tread band (2) in order to at least partially delimit said first and said second blocks (7, 8) on the axially external side thereof, each first pair of secondary grooves being formed by a first secondary groove (50) that extends between two of said first main grooves (10), which are mutually successive, and by a second secondary groove (60) that extends between two of said second main grooves (20), which are mutually successive.

2. Tyre according to claim 1, wherein each of said first main grooves (10) comprises a first segment (11) that has a curvilinear profile, extends from said first shoulder region (4) towards an equatorial plane (X) of said tread band, and has an inclination with respect to said circumferential direction that generally decreases from said first shoulder region (4) towards said central region (6).

3. Tyre according to either claim 1 or claim 2, wherein each of said second main grooves (20) comprises a first segment (21) that has a curvilinear profile, extends from said second shoulder region (5) towards an equatorial plane (X) of said tread band, and has an inclination with respect to said circumferential direction that generally decreases from said second shoulder region (5) towards said central region (6).

4. Tyre according to any one of the preceding claims, wherein said third main grooves (30) and said fourth main grooves (40) have a substantially symmetrical profile with respect to said circumferential direction.

5. Tyre according to any one of claims 2 to 4, wherein said end segment (12) of said first main groove (10) comprises a first portion (13), which extends as a continuation of said first segment (11) towards said first shoulder region (4), and a second portion (14), which extends as a continuation of said first portion (13) towards said second shoulder region (5).

6. Tyre according to claim 5, wherein said first portion (13) and said second portion (14) of said end segment straddle an equatorial plane (X) of said tread band.

7. Tyre according to either claim 5 or claim 6, wherein said first portion (13) of said end segment extends over the extension of said fourth main groove (40).

8. Tyre according to any one of claims 5 to 7, wherein said second portion (14) of said end segment extends over the extension of said third main groove (30).

9. Tyre according to any one of the preceding claims, wherein said first blocks (7) are V-shaped and comprise a vertex (7a) that points towards said first shoulder region (4) and a pair of arms (7b, 7c) that extend towards said second shoulder region (5) in respective directions (A, B) at opposite inclinations with respect to said circumferential direction.

10. Tyre according to any one of the preceding claims, wherein said second blocks (8) are V-shaped and comprise a vertex (8a) that points towards said second shoulder region (5) and a pair of arms (8b, 8c) that extend towards said first shoulder region (4) in respective directions (C, D) at opposite inclinations with respect to said circumferential direction.

11. Tyre according to any one of claims 9 to 10, wherein, in each pair of first and second blocks (7, 8), an arm (7c, 8b) of one of said first and second blocks is partially received in the concavity of the other of said first and second blocks.

12. Tyre according to any one of claims 9 to 11, wherein the vertices (7a) of said first blocks (7) are aligned in a circumferential direction and wherein the vertices (8a) of said second blocks (8) are aligned in a circumferential direction.

13. Tyre according to any one of the preceding claims, wherein each of said first secondary grooves (50) intersects one of said third main grooves (30) at an axially internal end region thereof.

14. Tyre according to any one of the preceding claims, wherein each of said second secondary grooves (60) intersects one of said fourth main grooves (40) at an axially internal end region thereof.

15. Tyre according to any one of the preceding claims, wherein a plurality of second pairs of secondary grooves (70, 80) are made in said tread band and are provided in regular succession over the circumferential extent of said tread band, each second pair of secondary grooves being formed by a third secondary groove (70), which extends in said first shoulder region (4) between two of said first main grooves (10) that are mutually successive, and by a fourth secondary groove (80), which extends in said second shoulder region (5) between two of said second main grooves (20) that are mutually successive.

## Patentansprüche

1. Reifen für Räder von Fahrzeugen, umfassend einen Laufflächenring (2), auf welchem definiert sind:
- ein erster Schulterbereich (4) und ein zweiter Schulterbereich (5), die einander axial entgegengesetzt sind;
- ein Zentralbereich (6), der zwischen dem ersten und dem zweiten Schulterbereich angeordnet ist;
- eine Vielzahl von Paaren von ersten Blöcken (7) und zweiten Blöcken (8), die in regelmäßiger Abfolge über die Umfangserstreckung des Zentralbereichs vorgesehen sind, wobei jeder erste Block und jeder zweite Block von jedem der Paare zumindest teilweise in einer axialen Richtung (Y) ausgerichtet sind, die an dem Laufflächenring definiert ist,
- eine Vielzahl von ersten Paaren von Hauptnuten (10, 20), die in regelmäßiger Abfolge über die Umfangserstreckung des Laufflächenrings (2) angeordnet sind, um teilweise die ersten und zweiten Blöcke (7, 8) zu begrenzen, wobei jedes erste Paar durch eine erste Hauptnut (10), die sich von dem ersten Schulterbereich (4) zu dem Zentralbereich (6) hin erstreckt, und durch eine zweite Hauptnut (20) gebildet wird, die sich von dem zweiten Schulterbereich (5) zu dem Zentralbereich (6) hin erstreckt,
- eine Vielzahl von zweiten Paaren von Hauptnuten (30, 40), die in regelmäßiger Abfolge über die Umfangserstreckung des Laufflächenrings in einer mit den ersten Paaren von Hauptnuten (10, 20) abwechselnden Position angeordnet sind, wobei jedes zweite Paar durch eine dritte Hauptnut (30), die sich von dem ersten Schulterbereich (4) zu dem Zentralbereich (6) hin erstreckt, und durch eine vierte Hauptnut (40) gebildet wird, die sich von dem zweiten Schulterbereich (5) zu dem Zentralbereich hin erstreckt, wobei die dritte und die vierte Hauptnut keine von der ersten, zweiten, dritten oder vierten Hauptnut schneidet,
wobei die zweite Hauptnut (20) ein axial inneres Ende (20b) umfasst, das mit der ersten Hauptnut (10) verbunden ist, und wobei die erste Hauptnut (10) ein axial inneres Endsegment (12) umfasst, das mit einer zweiten Hauptnut (20) verbunden ist die auf die zweite Hauptnut folgt, um so einen ersten Block (7) und einen zweiten Block (8) eines der Paare von ersten und zweiten Blöcken zu trennen, und
wobei eine Vielzahl von ersten Paaren von Sekundärnuten (50, 60) in dem Laufflächenring gebildet ist, die in regelmäßiger Abfolge über die Umfangserstreckung des Laufflächenrings (2) vorgesehen sind, um zumindest teilweise die ersten und die zweiten Blöcke (7, 8) auf der axial äußeren Seite davon zu begrenzen, wobei jedes erste Paar von Sekundärnuten durch eine erste Sekundärnut (50), die sich zwischen zwei der ersten Hauptnuten (10) erstreckt, die aufeinanderfolgen, und durch eine zweite Sekundärnut (60) gebildet wird, die sich zwischen zwei der zweiten Hauptnuten (20) erstreckt, die aufeinanderfolgen.

2. Reifen nach Anspruch 1, wobei jede der ersten Hauptnuten (10) ein erstes Segment (11) umfasst, das ein gekrümmtes Profil aufweist, sich von dem ersten Schulterbereich (4) zu einer Äquatorialebene (X) des Laufflächenrings hin erstreckt und eine Schräge in Bezug auf die Umfangsrichtung aufweist, die allgemein von dem ersten Schulterbereich (4) zu dem Zentralbereich (6) hin abnimmt.

3. Reifen nach Anspruch 1 oder Anspruch 2, wobei jede der zweiten Hauptnuten (20) ein erstes Segment (21) umfasst, das ein gekrümmtes Profil aufweist, sich von dem zweiten Schulterbereich (5) zu einer Äquatorialebene (X) des Laufflächenrings hin erstreckt und eine Schräge in Bezug auf die Umfangsrichtung aufweist, die allgemein von dem zweiten Schulterbereich (5) zu dem Zentralbereich (6) hin abnimmt.

4. Reifen nach einem der vorhergehenden Ansprüche, wobei die dritten Hauptnuten (30) und die vierten Hauptnuten (40) ein im Wesentlichen symmetrisches Profil in Bezug auf die Umfangsrichtung aufweisen.

5. Reifen nach einem der Ansprüche 2 bis 4, wobei das Endsegment (12) der ersten Hauptnut (10) einen ersten Abschnitt (13) umfasst, der sich als eine Fortsetzung des ersten Segments (11) zu dem ersten Schulterbereich (4) hin erstreckt, sowie einen zweiten Abschnitt (14), der sich als eine Fortsetzung des ersten Abschnitts (13) zu dem zweiten Schulterbereich (5) hin erstreckt.

6. Reifen nach Anspruch 5, wobei der erste Abschnitt (13) und der zweite Abschnitt (14) des Endsegments eine Äquatorialebene (X) des Laufflächenrings überspannen.

7. Reifen nach Anspruch 5 oder Anspruch 6, wobei der erste Abschnitt (13) des Endsegments sich über den Verlauf der vierten Hauptnut (40) erstreckt.

8. Reifen nach einem der Ansprüche 5 bis 7, wobei der zweite Abschnitt (14) des Endsegments sich über den Verlauf der dritten Hauptnut (30) erstreckt.

9. Reifen nach einem der vorhergehenden Ansprüche, wobei die ersten Blöcke (7) V-förmig sind und einen Scheitelpunkt (7a) umfassen, der zu dem ersten Schulterbereich (4) weist, sowie ein Paar von Armen (7b, 7c), die sich zu dem zweiten Schulterbereich (5) hin in jeweilige Richtungen (A, B) mit entgegengesetzten Schrägen in Bezug auf die Umfangsrichtung erstrecken.

10. Reifen nach einem der vorhergehenden Ansprüche, wobei die zweiten Blöcke (8) V-förmig sind und einen Scheitelpunkt (8a) umfassen, der zu dem zweiten Schulterbereich (5) weist, sowie ein Paar von Armen (8b, 8c), die sich zu dem ersten Schulterbereich (4) hin in jeweilige Richtungen (C, D) mit entgegengesetzten Schrägen in Bezug auf die Umfangsrichtung erstrecken.

11. Reifen nach einem der Ansprüche 9 bis 10, wobei in jedem Paar von ersten und zweiten Blöcken (7, 8), ein Arm (7c, 8b) eines der ersten und zweiten Blöcke teilweise in der Konkavität des anderen der ersten und zweiten Blöcke aufgenommen ist.

12. Reifen nach einem der Ansprüche 9 bis 11, wobei die Scheitelpunkte (7a) der ersten Blöcke (7) in einer Umfangsrichtung ausgerichtet sind und wobei die Scheitelpunkte (8a) der zweiten Blöcke (8) in einer Umfangsrichtung ausgerichtet sind.

13. Reifen nach einem der vorhergehenden Ansprüche, wobei jede der ersten Sekundärnuten (50) eine der dritten Hauptnuten (30) an einem axial inneren Endbereich davon schneidet.

14. Reifen nach einem der vorhergehenden Ansprüche, wobei jede der zweiten Sekundärnuten (60) eine der vierten Hauptnuten (40) an einem axial inneren Endbereich davon schneidet.

15. Reifen nach einem der vorhergehenden Ansprüche, wobei eine Vielzahl von zweiten Paaren von Sekundärnuten (70, 80) in dem Laufflächenring gebildet und in regelmäßiger Abfolge über die Umfangserstreckung des Laufflächenrings vorgesehen sind, wobei jedes zweite Paar von Sekundärnuten durch eine dritte Sekundärnut (70), die sich in dem ersten Schulterbereich (4) zwischen zwei der ersten Hauptnuten (10) erstreckt, die aufeinanderfolgen, und durch eine vierte Sekundärnut (80) gebildet wird, die sich in dem zweiten Schulterbereich (5) zwischen zwei der zweiten Hauptnuten (20) erstreckt, die aufeinanderfolgen.

## Revendications

1. Pneu pour roues de véhicules, comprenant une bande de roulement (2), sur laquelle sont définies :
- une première région d'épaulement (4) et une deuxième région d'épaulement (5) qui sont axialement opposées ;
- une région centrale (6) qui est interposée entre lesdites première et deuxième régions d'épaulement ;
- une pluralité de paires de premiers pavés (7) et de deuxièmes pavés (8) qui sont prévus en succession régulière sur l'étendue circonférentielle de ladite région centrale, chaque premier pavé et chaque deuxième pavé de chacune desdites paires étant au moins partiellement alignés dans une direction axiale (Y) qui est définie sur ladite bande de roulement,
- une pluralité de premières paires de rainures principales (10, 20) qui sont prévues en succession régulière sur l'étendue circonférentielle de ladite bande de roulement (2) afin de délimiter partiellement lesdits premier et deuxième pavés (7, 8), chaque première paire étant formée par une première rainure principale (10) qui s'étend de ladite première région d'épaulement (4) vers ladite région centrale (6), et par une deuxième rainure principale (20) qui s'étend de ladite deuxième région d'épaulement (5) vers ladite région centrale (6),
- une pluralité de deuxièmes paires de rainures principales (30, 40) qui sont prévues en succession régulière sur l'étendue circonférentielle de ladite bande de roulement en position alternée avec lesdites premières paires de rainures principales (10, 20), chaque deuxième paire étant formée par une troisième rainure principale (30) qui s'étend de ladite première région d'épaulement (4) vers ladite région centrale (6), et par une quatrième rainure principale (40) qui s'étend de ladite deuxième région d'épaulement (5) vers ladite région centrale, lesdites troisième et quatrième rainures principales ne coupant aucune autre première, deuxième, troisième ou quatrième rainure principale,
dans lequel ladite deuxième rainure principale (20) comprend une extrémité axialement interne (20b) qui est reliée à ladite première rainure principale (10) et dans lequel ladite première rainure principale (10) comprend un segment d'extrémité axialement interne (12) qui est relié à une deuxième rainure principale (20) qui est successive à ladite deuxième rainure principale de manière à séparer un premier pavé (7) et un deuxième pavé (8) de l'une desdites paires de premier et deuxième pavés, et
dans lequel une pluralité de premières paires de rainures secondaires (50, 60) sont réalisées dans ladite bande de roulement, qui sont prévues en succession régulière sur l'étendue circonférentielle de ladite bande de roulement (2) afin de délimiter au moins partiellement lesdits premier et deuxième pavés (7, 8) sur le côté axialement externe de ceux-ci, chaque première paire de rainures secondaires étant formée par une première rainure secondaire (50) qui s'étend entre deux desdites premières rainures principales (10), qui sont mutuellement successives, et par une deuxième rainure secondaire (60) qui s'étend entre deux desdites deuxièmes rainures principales (20), qui sont mutuellement successives.

2. Pneu selon la revendication 1, dans lequel chacune desdites premières rainures principales (10) comprend un premier segment (11) qui a un profil curviligne, s'étend de ladite première région d'épaulement (4) vers un plan équatorial (X) de ladite bande de roulement, et a une inclinaison par rapport à ladite direction circonférentielle qui diminue généralement de ladite première région d'épaulement (4) vers ladite région centrale (6).

3. Pneu selon l'une des revendications 1 et 2, dans lequel chacune desdites deuxièmes rainures principales (20) comprend un premier segment (21) qui a un profil curviligne, s'étend de ladite deuxième région d'épaulement (5) vers un plan équatorial (X) de ladite bande de roulement, et a une inclinaison par rapport à ladite direction circonférentielle qui diminue généralement de ladite deuxième région d'épaulement (5) vers ladite région centrale (6).

4. Pneu selon l'une quelconque des revendications précédentes, dans lequel lesdites troisièmes rainures principales (30) et lesdites quatrièmes rainures principales (40) ont un profil sensiblement symétrique par rapport à ladite direction circonférentielle.

5. Pneu selon l'une quelconque des revendications 2 à 4, dans lequel ledit segment d'extrémité (12) de ladite première rainure principale (10) comprend une première partie (13), qui s'étend dans le prolongement dudit premier segment (11) vers ladite première région d'épaulement (4), et une deuxième partie (14), qui s'étend dans le prolongement de ladite première partie (13) vers ladite deuxième région d'épaulement (5).

6. Pneu selon la revendication 5, dans lequel ladite première partie (13) et ladite deuxième partie (14) dudit segment d'extrémité chevauchent un plan équatorial (X) de ladite bande de roulement.

7. Pneu selon l'une des revendications 5 et 6, dans lequel ladite première partie (13) dudit segment d'extrémité s'étend sur l'extension de ladite quatrième rainure principale (40).

8. Pneu selon l'une quelconque des revendications 5 à 7, dans lequel ladite deuxième partie (14) dudit segment d'extrémité s'étend sur l'extension de ladite troisième rainure principale (30).

9. Pneu selon l'une quelconque des revendications précédentes, dans lequel lesdits premiers pavés (7) sont en forme de V et comprennent un sommet (7a) qui pointe vers ladite première région d'épaulement (4) et une paire de bras (7b, 7c) qui s'étendent vers ladite deuxième région d'épaulement (5) dans des directions respectives (A, B) à des inclinaisons opposées par rapport à ladite direction circonférentielle.

10. Pneu selon l'une quelconque des revendications précédentes, dans lequel lesdits deuxièmes pavés (8) sont en forme de V et comprennent un sommet (8a) qui pointe vers ladite deuxième région d'épaulement (5) et une paire de bras (8b, 8c) qui s'étendent vers ladite première région d'épaulement (4) dans des directions respectives (C, D) à des inclinaisons opposées par rapport à ladite direction circonférentielle.

11. Pneu selon l'une quelconque des revendications 9 et 10, dans lequel, dans chaque paire de premier et deuxième pavés (7, 8), un bras (7c, 8b) de l'un desdits premier et deuxième pavés est partiellement reçu dans la concavité de l'autre desdits premier et deuxième pavés.

12. Pneu selon l'une quelconque des revendications 9 à 11, dans lequel les sommets (7a) desdits premiers pavés (7) sont alignés dans une direction circonférentielle et dans lequel les sommets (8a) desdits deuxièmes pavés (8) sont alignés dans une direction circonférentielle.

13. Pneu selon l'une quelconque des revendications précédentes, dans lequel chacune desdites premières rainures secondaires (50) coupe l'une desdites troisièmes rainures principales (30) au niveau d'une région d'extrémité axialement interne de celle-ci.

14. Pneu selon l'une quelconque des revendications précédentes, dans lequel chacune desdites deuxièmes rainures secondaires (60) coupe l'une desdites quatrièmes rainures principales (40) au niveau d'une région d'extrémité axialement interne de celle-ci.

15. Pneu selon l'une quelconque des revendications précédentes, dans lequel une pluralité de deuxièmes paires de rainures secondaires (70, 80) sont réalisées dans ladite bande de roulement et sont prévues en succession régulière sur l'étendue circonférentielle de ladite bande de roulement, chaque deuxième paire de rainures secondaires étant formées par une troisième rainure secondaire (70), qui s'étend dans ladite première région d'épaulement (4) entre deux desdites premières rainures principales (10) qui sont mutuellement successives, et par une quatrième rainure secondaire (80), qui s'étend dans ladite deuxième région d'épaulement (5) entre deux desdites deuxièmes rainures principales (20) qui sont mutuellement successives.
